# EUROPÄISCHE PATENTANMELDUNG

(11) **EP 1 275 566 A2**
(43) Veröffentlichungstag der Anmeldung: **15.01.2003**
(21) Anmeldenummer: 02014965.4
(22) Anmeldetag: 09.07.2002
(51) Int. Cl.: B60R 21/26

(54) **Pyrotechnischer Gasgenerator**

(30) Priorität: 12.07.2001 DE 20111622 U
(71) Anmelder: TRW Airbag Systems GmbH & Co. KG, 84544 Aschau am Inn (DE)
(72) Erfinder: Schropp, Roland, Dr., 93105 Tegernheim (DE); Winterhalder, Marc, 84518 Garching/Alz (DE)
(74) Vertreter: Sulzbach, Werner, Dipl.-Chem. Dr.

(57) **Zusammenfassung**

Die Erfindung betrifft einen pyrotechnischen Gasgenerator, insbesondere für Fahrzeuginsassen-Rückhaltesysteme, mit wenigstens einer Brennkammer (7, 9) und einem der Brennkammer (7, 9)'zugeordneten gaserzeugenden Satz aus einem aus verdichtetem Treibstoff gebildeten Formkörper (5), der dadurch gekennzeichnet ist, daß der Formkörper (5) durch ein vom Treibstoff umschlossenes Stützgeflecht (21) verstärkt ist.

## Beschreibung

Die vorliegende Erfindung betrifft einen pyrotechnischen Gasgenerator, insbesondere für Fahrzeuginsassen-Rückhaltesysteme, mit wenigstens einer Brennkammer und einem der Brennkammer zugeordneten gaserzeugenden Satz aus einem aus verdichtetem Treibstoff gebildeten Formkörper.

Bisher bekannte pyrotechnische Gasgeneratoren enthalten zur Einstellung der gewünschten Abbrandcharakteristik entweder Schüttungen aus Treibstoffpulvern, Granulaten oder Tabletten, oder aber Formkörper mit definierter Geometrie aus verdichtetem Treibstoffmaterial. In der DE 197 40 531 A1 ist ein mehrstufiger Gasgenerator offenbart, der eine ringförmige Treibstoffkammer aufweist, die einen durch Verpressen hergestellten Treibstofformkörper enthält und die den Innenraum des Gasgenerators in zwei Brennkammern unterteilt. Diesen Brennkammern sind jeweils eigene Zünder sowie Ausströmöffnungen zugeordnet. Durch unterschiedlich große Außenoberflächen des Treibstoffs sind je nach Bedarf verschiedene Leistungsstufen einstellbar.

Die Erfindung ermöglicht eine noch variablere Einstellung der Abbrandeigenschaften und schafft zudem einen Gasgenerator, der noch einfacher und kostengünstiger herstellbar ist. Erfindungsgemäß wird hierzu ein pyrotechnischer Gasgenerator der eingangs genannten Art bereitgestellt, der dadurch gekennzeichnet ist, daß der Formkörper durch ein vom Treibstoff umschlossenes Stützgeflecht verstärkt ist.

Das Stützgeflecht kann entweder zugstabil, d.h. elastisch, druckstabil, d.h. starr, oder gleichermaßen zug- und druckstabil ausgebildet sein. Als Stützgeflecht verwendbar sind sowohl zweidimensionale als auch dreidimensionale Gewebe oder Gewirke. Die räumliche Ausdehnung des Stützgeflechtes in Richtung von wenigstens zwei, vorzugsweise aller drei Raumachsen des Formkörpers beträgt bevorzugt mindestens 30 %, besonders bevorzugt mindestens 50 % der Ausdehnung des Formkörpers. Damit ist eine erhebliche Verbesserung der Stabilität des Treib stofformkörpers erreichbar.

Vorzugsweise besteht das Stützgeflecht aus einem inerten Material, wie beispielsweise aus einem keramischen Material, Metallen und Metallegierungen, Kunststoffen, faserverstärkten Kunststoffen, Glasfasern oder Kohlefasern, oder aus einer Kombination der genannten Materialien. Ferner ist es möglich, das Stützgeflecht aus einem energetischen Material zu bilden, welches beim Abbrand des Treibstoffs vollständig oder zumindest teilweise mit verbrennt.

In besonders vorteilhafter Weise kann der mit einem Stützgeflecht verstärkte Treibstofformkörper in einem mehrstufigen Gasgenerator verwendet werden, wobei dieser Gasgenerator wenigstens zwei durch den Formkörper voneinander getrennte Brennkammern sowie wenigstens zwei jeweils einer Brennkammer zugeordnete Zünder aufweist. Durch unterschiedliche Abbrandeigenschaften der den jeweiligen Brennkammern benachbarten Oberflächen des Formkörpers sind verschiedene Leistungsstufen einstellbar. Die unterschiedlichen Abbrandeigenschaften können unter anderem durch verschieden große Oberflächen, verschiedene Oberflächenstrukturen oder aber durch verschiedene Treibstoffzusammensetzungen der Oberflächen erzielt werden. Bevorzugt ist der Formkörper ein Hohlzylinder, durch den im Gasgenerator eine in bezug auf den Hohlzylinder radial außen liegende Brennkammer und eine radial innen liegende Brennkammer gebildet werden.

Die Verstärkung des Treibstofformkörpers mit einem Stützgeflecht hat den Vorteil, daß die bisher erforderlichen Trennwände im Gasgenerator zur Abstützung des Treibstoffs entfallen können. Hierdurch ist einerseits eine Gewichtseinsparung möglich, andererseits ist durch die Einsparung von Bauteilen eine einfachere und kostengünstigere Herstellung möglich. Darüber hinaus lassen sich auch die Brennraumgeometrien variabler gestalten. So sind beispielsweise unterschiedliche Abbrandrichtungen des gaserzeugenden Satzes, beispielsweise von innen nach außen oder von außen nach innen, einfacher zu verwirklichen. Die Verstärkung des Treibstofformkörpers ermöglicht schließlich die Einstellung von höheren Druckdifferenzen zwischen der Formkörperinnenseite und der Formkörperaußenseite, ohne daß die Gefahr eines Zerbrechens des Formkörpers besteht. Der Formkörper unterliegt deshalb keinen Einschränkungen hinsichtlich der Oberflächengestaltung, der maximal erzeugbaren Gasmengen und der Gasmengenerzeugungsprofile. Im Vergleich zu herkömmlichen gaserzeugenden Sätzen sind somit weitere Gewichts- und Kosteneinsparungen bei Einstellung vergleichbarer Abbrandcharakteristiken möglich. Da der mit einem Stützgeflecht verstärkte Treibstofformkörper außerdem eine höhere Stabilität gegen Stoß- und Fallbelastungen aufweist, ist schließlich auch die Betriebssicherheit des erfindungsgemäßen Gasgenerators verbessert.

Weitere Merkmale und Vorteile der Erfindung ergeben sich aus der nachfolgenden Beschreibung und aus den Zeichnungen, auf die Bezug genommen wird. In den Zeichnungen zeigen:
- Figur 1 eine Querschnittsansicht durch einen mehrstufigen Gasgenerator gemäß der Erfindung und
- Figur 2 einen Querschnitt durch einen in einem erfindungsgemäßen Gasgenerator verwendbaren Treibstoff-Formkörper.

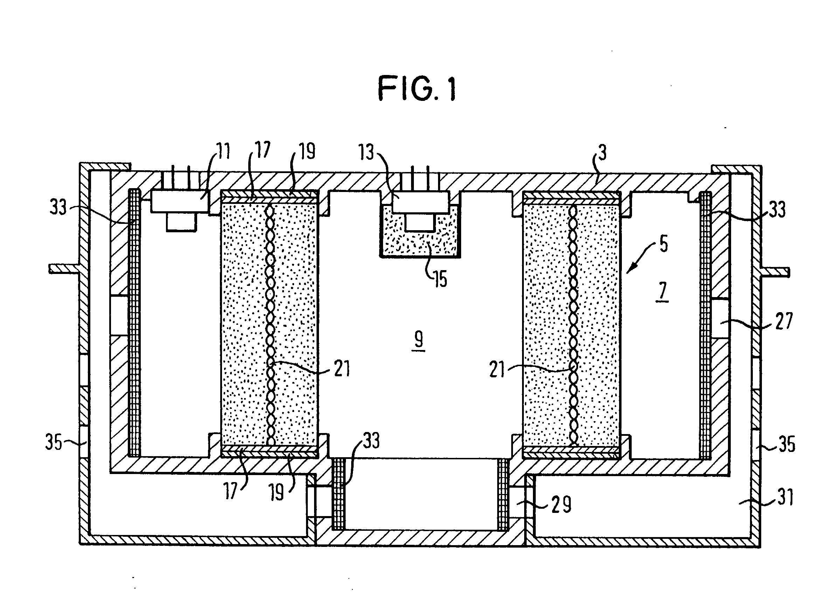

Figur 1 zeigt einen zweistufigen pyrotechnischen Gasgenerator zum Entfalten eines hier nicht dargestellten Gassacks. Der Gasgenerator hat ein zylinderförmiges Außengehäuse 3. In das Außengehäuse 3 ist ein hohlzylindrischer Treibstoff-Formling 5 eingebracht, der aus einem durch Verpressen verdichteten Treibstoffmaterial besteht und der den Innenraum des Gasgenerators in zwei Brennkammern, nämlich eine in bezug auf den Treibstoff-Formkörper 5 radial äußere Brennkammer 7 sowie eine zentrale, innere Brennkammer 9 unterteilt. Jede Brennkammer hat einen eigenen, ihr zugeordneten Zünder 11, 13. Der Zünder 13 weist bei der hier dargestellten Ausführungsform zusätzlich eine Verstärkerladung 15 auf.

An seinen Stirnseiten ist der Treibstofformkörper 5 vorzugsweise mit einer Beschichtung 17 versehen und gegenüber dem Außengehäuse 3 durch einen hochtemperaturbeständigen, vorzugsweise elastischen Isolierring 19 begrenzt. Die Beschichtung 17 und der Isolierring 19 verhindern einen Abbrand in axialer Richtung und fixieren den Treibstoff-Formkörper 5 in seiner Lage.

Der Treibstofformkörper 5 ist durch ein vom Treibstoffmaterial umschlossenes Stützgeflecht 21 verstärkt. Das Stützgeflecht 21 ist vorzugsweise ein die Abbrandeigenschaften des Treibstoffs nicht beeinflussendes inertes Material, wie beispielsweise ein Keramikmaterial oder ein Metallgeflecht. Geeignet sind ferner Glas- oder Kohlefasern oder inerte Kunststoffmaterialien. Alternativ dazu kann das Stützgeflecht auch aus einem energetischen Material gebildet sein, welches beim Abbrand des Treibstoff-Formkörpers vollständig oder teilweise mit verbrennt. Bei der hier gezeigten Ausführungsform ist das Stützgeflecht 21 als ein im wesentlichen zweidimensionales Flächengebilde ausgestaltet. In dem Treibstoff-Formkörper 5 können jedoch auch mehrere dieser zweidimensionalen Stützgeflechte enthalten sein. Ferner ist auch die Verwendung eines netzwerkartigen, dreidimensionalen Stützgeflechts möglich.

Die den Brennkammern 7, 9 jeweils benachbarten Oberflächen des Treibstofformkörpers 5 sind unterschiedlich groß und weisen deshalb unterschiedliche Abbrandeigenschaften auf. Durch eine entsprechende Veränderung der Oberflächenstruktur lassen sich diese Unterschiede noch verstärken. Des weiteren können auch unterschiedliche Treibstoffzusammensetzungen, ggf. in Verbindung mit unterschiedlich strukturierten Oberflächen des Treibstofformkörpers verwendet werden. Bei der Aktivierung des Zünders 13 ergibt sich somit ein verschieden schneller Abbrand des Treibstoff-Formkörpers 5 als beim Aktivieren des Zünders 11. Dadurch lassen sich verschiedene Gaserzeugungsraten und Schubprofile erzeugen, die zu unterschiedlichen Aufblascharakteristika und Druckverläufen im Inneren des Gassacks führen. Die Zünder 11 und 13 können einzeln, zeitversetzt oder gleichzeitig gezündet werden, so daß bei der hier gezeigten Ausführungsform je nach Zeitversatz drei unterschiedliche Leistungsstufen erzielt werden können.

Jede Brennkammer 7, 9 hat eigene Ausströmöffnungen 27 bzw. 29, über die das erzeugte Heißgas in eine gemeinsame, das Außengehäuse 3 umgebende Filterkammer 31 strömt. Vor den Ausströmöffnungen 27, 29 sind Filtereinheiten 33 positioniert, die heiße Partikel zurückhalten und das Heißgas abkühlen. Über mehrere Öffnungen 35 im Gehäuse der Filterkammer 31 strömt das erzeugte Gas in den Gassack ein.

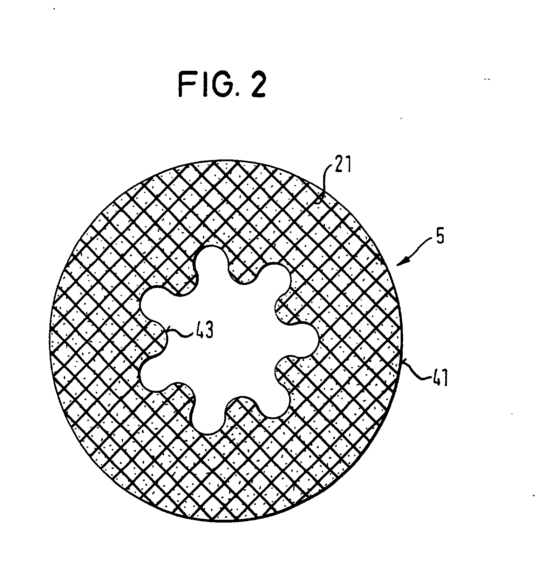

Figur 2 zeigt ein mögliches Querschnittsprofil für den Treibstoff-Formkörper 5. Der hier gezeigte Formkörper hat eine zylindrische Außenkontur 41 sowie eine wellenförmige Innenkontur 43. Der Formkörper ist zudem mit einem schematisch dargestellten Stützgeflecht verstärkt, das hier dreidimensional, nach Art einer Netzwerkstruktur, ausgebildet ist. Hierdurch ist die Erzeugung noch komplexerer Oberflächengeometrien und damit die Anpassung der Gaserzeugungsprofile an den jeweiligen Anwendungsfall ohne Veränderung des Gasgeneratoraufbaus möglich. Im gezeigten Ausführungsbeispiel entspricht die räumliche Ausdehnung des Stützgeflechts der des Formkörpers. Bereits ab einer räumlichen Ausdehnung des Stützgeflechts in den drei Raumachsen über ca. 30 % der Ausdehnung des Formkörpers wird aber eine erhebliche Verbesserung der Formkörperstabilität erzielt.

Der Treibstofformkörper kann in einfachster Weise durch bekannte Fertigungsverfahren wie Verpressen, Gießen oder Extrudieren hergestellt werden. Zum Verpressen wird das Stützgeflecht gemeinsam mit dem Treibstoffpulver in die Pressform gegeben und durch das Kompaktieren in den Presskörper als 2-oder 3-dimensionales Stützgerüst eingebaut. Beim Gießen befindet sich das Stützgeflecht bereits vorab in der Gießform und wird durch das Einbringen des Treibstoffes in flüssiger Form vollständig von diesem umschlossen. Nach dem Aushärten und Erstarren des Treibstoffes ist das Stützgeflecht ebenfalls als 2- oder 3-dimensionales Gebilde in den Treibstoffkörper integriert. Beim Extrudieren wird eine viskose Treibstoffpaste gemeinsam mit dem 2- oder 3-dimensionalen Stützgeflecht unter Druck zu den gewünschten Treibstoffkörpern verarbeitet.

Die Verwendung des mit einem Stützgeflecht verstärkten Treibstofformkörpers reduziert die Anzahl der Bauteile des Gasgenerators, da zusätzliche Trennwände entfallen können. Gleichzeitig ist eine variablere Gestaltung der Abbrandcharakteristika und Gaserzeugungsprofile ohne bautechnische Änderungen des Gasgenerators möglich.

Der mit einem Stützgeflecht verstärkte Treibstoff-Formkörper kann auch andere Geometrien als in der oben beschriebenen Ausführungsform aufweisen. Beispielsweise ist die Verwendung eines oder mehrerer plattenförmiger Formkörper mit unterschiedlichen Oberflächenstrukturen und/oder Treibstoffzusammensetzungen denkbar.

## Patentansprüche

1. Pyrotechnischer Gasgenerator, insbesondere für Fahrzeuginsassen-Rückhaltesysteme, mit wenigstens einer Brennkammer (7, 9) und einem der Brennkammer (7, 9) zugeordneten gaserzeugenden Satz aus einem aus verdichtetem Treibstoff gebildeten Formkörper (5), **dadurch gekennzeichnet, daß** der Formkörper (5) durch ein vom Treibstoff umschlossenes Stützgeflecht (21) verstärkt ist.

2. Pyrotechnischer Gasgenerator nach Anspruch 1, **dadurch gekennzeichnet, daß** das Stützgeflecht (21) zugstabil ist.

3. Pyrotechnischer Gasgenerator nach Anspruch 1, **dadurch gekennzeichnet, daß** das Stützgeflecht (21) druckstabil ist.

4. Pyrotechnischer Gasgenerator nach Anspruch 1, **dadurch gekennzeichnet, daß** das Stützgeflecht (21) zug- und druckstabil ist.

5. Pyrotechnischer Gasgenerator nach einem der Ansprüche 1 bis 4, **dadurch gekennzeichnet, daß** das Stützgeflecht (21) ein im wesentlichen zweidimensionales Gewebe oder Gewirk ist.

6. Pyrotechnischer Gasgenerator nach einem der Ansprüche 1 bis 4, **dadurch gekennzeichnet, daß** das Stützgeflecht (21) ein dreidimensionales Gewebe oder Gewirk ist.

7. Pyrotechnischer Gasgenerator nach einem der Ansprüche 1 bis 6, **dadurch gekennzeichnet, daß** das Stützgeflecht (21) aus einem aus der Gruppe der keramischen Materialien, Metalle und Metallegierungen, Kunststoffe, faserverstärkten Kunststoffe, Glasfasern und Kohlefasern, auch in Kombination miteinander, ausgewählten Materialien gebildet ist.

8. Pyrotechnischer Gasgenerator nach einem der Ansprüche 1 bis 6, **dadurch gekennzeichnet, daß** das Stützgeflecht aus einem energetischen Material gebildet ist.

9. Pyrotechnischer Gasgenerator nach einem der Ansprüche 1 bis 8, ferner **gekennzeichnet durch** wenigstens zwei **durch** den Formkörper voneinander getrennte Brennkammern (7, 9) sowie wenigstens zwei jeweils einer Brennkammer zugeordnete Zünder (11, 13), wobei die den jeweiligen Brennkammern benachbarten Oberflächen des Formkörpers (5) unterschiedliche Abbrandeigenschaften aufweisen.

10. Pyrotechnischer Gasgenerator nach Anspruch 9, **dadurch gekennzeichnet, daß** die unterschiedlichen Abbrandeigenschaften durch verschieden große Oberflächen erzielt werden.

11. Pyrotechnischer Gasgenerator nach Anspruch 9, **dadurch gekennzeichnet, daß** die unterschiedlichen Abbrandeigenschaften durch verschiedene Oberflächenstrukturen erzielt werden.

12. Pyrotechnischer Gasgenerator nach Anspruch 9, **dadurch gekennzeichnet, daß** die unterschiedlichen Abbrandeigenschaften durch verschiedene Treibstoffzusammensetzungen der Oberflächen erzielt werden.

13. Pyrotechnischer Gasgenerator nach Anspruch 9, **dadurch gekennzeichnet, daß** der Formkörper (5) ein Hohlzylinder ist und der pyrotechnische Gasgenerator eine in bezug auf den Hohlzylinder radial außen liegende Brennkammer (7) und eine radial innen liegende Brennkammer (9) aufweist.
